# EUROPEAN PATENT SPECIFICATION

(11) **EP 3 824 213 B1**
(45) Date of publication and mention of the grant of the patent: **11.03.2026**
(21) Application number: 19749428.9
(22) Date of filing: 17.07.2019
(51) Int. Cl.: F16L 19/065

(54) **PIPE CONNECTIONS FOR USE IN GRAVITATIONAL WATER DRAINAGE SYSTEMS**
ROHRVERBINDUNGEN ZUR VERWENDUNG IN SCHWERKRAFTENTWÄSSERUNGSSYSTEMEN
RACCORDS DE TUYAU DESTINÉS À ÊTRE UTILISÉS DANS DES SYSTÈMES DE DRAINAGE D'EAU PAR GRAVITÉ

(30) Priority: 19.07.2018 IL 26067318
(43) Date of publication of application: 26.05.2021
(60) Divisional application: 25213342.6
(73) Proprietor: Huliot Agricultural Cooperative Society Ltd, 12145 Upper Galilee (IL)
(72) Inventor: GADA, Nir, 1220000 Upper Galilee (IL); YOGEV, Ilan, 1214500 Upper Galilee (IL); ZAMIR, Peleg, 1790600 Shimshit (IL); PELEG, Ronen, 1214500 Upper Galilee (IL)
(74) Representative: South, Nicholas Geoffrey
(86) International application number: PCT/IL2019/050808
(87) International publication number: WO 2020/016895

(56) References cited:
- EP-A2- 1 536 175
- WO-A1-2014/153184
- DE-A1- 3 620 869
- DE-U1- 29 702 223
- DE-U1- 8 008 838
- FR-A1- 2 854 939
- FR-A1- 3 032 773
- GB-A- 1 272 065
- GB-A- 2 080 466
- GB-A- 2 095 780
- GB-A- 691 372
- US-A- 3 201 859
- US-A1- 2004 007 874

## Description

### Field of the Invention

The invention relates to pipe connections for use in gravitational water drainage systems including *inter alia* sewage water, waste water, rain water, and the like.

### Background of the Invention

Conventional pipe connections for wastewater drainage systems can be classified into two types: First, a pipe with a pipe socket for sliding insertion of a pipe end thereinto. And second, a pipe connection having two or more pipe sockets for each sliding insertion of a pipe end therein. A nut is clockwise tightened on a pipe socket after sliding insertion of a pipe end through the nut into the pipe socket. A discrete seal is deployed between a nut and a pipe socket for ensuring a watertight seal between the discrete seal and the nut and between the discrete seal and the pipe socket. Pipe connections typically have a single start screw thread engagement and require at least four threads to conform to Israel Standard No. 958 Plastics Piping Systems soil and waste discharge (low and high temperature) inside building: Polypropylene (PP) systems for ensuring a watertight seal. Pipe connections can be designed for connecting same diameter or different diameter pipes.

Pipe connections are typically supplied in plastic bags with loose parts requiring initial assembly of placing a discrete nut and a discrete seal on a pipe end. Such initial assembly is time consuming and cumbersome. Provision of loose parts can lead to one or more parts being mislaid during assembly which is time consuming and cumbersome. After installation, nuts can become loose over extended periods of time which can lead to leakage.

There is a need for improved pipe connections for assisting installation and ensuring watertight seals over extended time periods.
DE 29702223 U1 discloses a clamping connector for connecting two pipes, the connector comprising a elastomeric nut having an internal thread for attachment to an external thread on a first pipe, and an integral sealing ring for receiving a second pipe.
FR 2854939 A1 discloses a tube clamp comprising a nut and a one-piece seal having a conical profile for surrounding a tube and being pressed into a corresponding bore in a receiving component when the nut is screwed onto the component.
GB 2095780 A, GB 2080466 A and WO 2014/153184 A disclose compression joints which include a ratchet mechanism.
EP 1536175 A2 discloses a tube fitting including means for providing a visual indication of when the fitting has been tightened to a predetermined degree.

### Summary of the Invention

Generally speaking, the present invention is directed toward improvements in pipe connections for gravitational water drainage systems including *inter alia* sewage water, waste water, rain water, and the like.

In accordance with a first exemplary aspect not forming part of the claimed subject matter, a nut with injection molded integral seal includes a nut body and an injection molded integral seal for use with a conventional pipe socket for forming a pipe connection for sealing a pipe therein. An injection molded integral seal includes an inward radial directed deformable collar having a non-deformed internal diameter smaller than a pipe's external diameter intended to be inserted into a pipe socket. Accordingly, slidingly inserting a pipe end through a nut with injection molded integral seal into a pipe socket radially outwardly deforms an inward radial directed deformable collar. After insertion of a pipe end, tightening a nut on a pipe socket further deforms its inward radial directed deformable collar to seal a pipe connection. Nuts can be formed with different designs of injection molded integral seals each including an inward radial directed deformable collar. Nuts with injection molded integral seal can manufactured by conventional injection molding manufacturing methods including *inter alia* double shot molding, overmolding, and the like. Nuts with injection molded integral seal afford a secure watertight arrangement equivalent to a conventional discrete nut and discrete seal.

In accordance with a second exemplary aspect not forming part of the claimed subject matter, a pipe connection includes a pipe socket, a nut, a seal and at least one ratchet arrangement having a loosening torque for counterclockwise loosening a pipe connection from a sealed state greater than a tightening torque for clockwise tightening the pipe connection into the sealed state. The loosening torque is typically at least twice as great as the tightening torque. A ratchet arrangement can be implemented as follows: A nut includes an internal ratchet wheel and a pipe socket includes an outward directed tooth for engaging the nut's internal ratchet wheel. Alternatively, a pipe socket includes an external ratchet wheel and a nut includes an inward directed tooth for engaging the pipe socket's external ratchet wheel. A ratchet wheel can include ratchet teeth around its full circumference or a section of its circumference. A ratchet arrangement reduces likelihood of a nut becoming loose over extended time periods but still enables a pipe connection to be opened for maintenance purposes, and the like.

In accordance with a third aspect, forming an embodiment of the present invention, a pipe connection includes a pipe socket, a nut, a seal and at least one Ready-To-Install (RTI) arrangement for enabling factory assembly of a pipe connection in a ready-to-install state and providing a visual indication that the pipe connection has been tightened from a ready-to-install state to a sealed state for sealing a pipe end in the pipe connection. Such visual indication of a pipe connection having been tightened to a sealed state is of particular importance to prevent sliding insertion of a pipe end into a ready-to-install pipe connection which is then inadvertently not tightened to a sealed state which would lead to leakage. In particular, the present invention provides a pipe connection as defined in claim 1.

Ready-To-Install (RTI) arrangements are particularly suitable for multi-start screw threads compared to single start screw threads since the more the number of screw thread starts so a pipe connection requires less rotation from a ready-to-install state to a sealed state. RTI arrangements include a tooth deployed between a spaced apart pair of rotation stops for correspondingly preventing unforced loosening of a pipe connection and unforced applying a sealing force to a seal. RTI arrangements are designed such that a sufficiently great loosening torque urges a nut beyond a rotation stop for preventing unforced loosening for maintenance purposes and the like. Also, a sufficiently great tightening torque urges a nut past a rotation stop for preventing unforced applying a sealing force to a seal for sealing purposes.

RTI arrangements can be implemented as follows: A nut includes a spaced apart pair of inward directed rotation stops and a pipe socket includes an outward directed tooth deployed between the nut's spaced apart pair of inward directed rotation stops in a ready-to-install state. Alternatively, a pipe socket includes a spaced apart pair of outward directed rotation stops and a nut includes an inward directed tooth deployed between the pipe socket's spaced apart pair of outward directed rotation stops in a ready-to-install state. Ready-to-install arrangements can include two or more engagements of a tooth deployed between a spaced apart pair of rotation stops. Such two or more engagements are preferably equi-spaced around a pipe socket. Pipe connections with RTI arrangements save installation time and preclude a discrete nut and/or a discrete seal being mislaid or dropped.

Pipe connections can be implemented with one or more of the described aspects and can be optimally implemented with all three aspects. Pipe connections implementing a ratchet arrangement and a RTI arrangement preferably include a pipe socket having an outward directed tooth initially deployed between a RTI arrangement's spaced apart pair of inward directed rotation stops and thereafter engaging a ratchet arrangement's internal ratchet wheel. The present invention can be equally applied to single start and multi-start screw threads. Multi-start screw threads can include either an odd number or even number of screw threads. Pipe connections are preferably provided with visible indicators for indicating a pipe socket's screw thread start and a nut's screw thread start for assisting tightening a nut on a pipe socket. Pipe connections of the present invention can be implemented in a wide range of pipe fittings including *inter alia* couplers, elbow fittings, T fittings, Y fittings, X fittings, and the like. Pipe connections can be designed to connect two or more plastic pipes of the same diameter or different diameters.

### Brief Description of Drawings

In order to understand the invention and to see how it can be carried out in practice, preferred embodiments will now be described, by way of nonlimiting examples only, with reference to the accompanying drawings in which similar parts are likewise numbered, and in which:
Fig. 1 is a front elevation view of a conventional pre-installed pipe connection for connecting two different diameter pipes;
Fig. 2 is a longitudinal cross section of a conventional nut along line A-A in Figure 1;
Fig. 3 is a perspective view of the Figure 1 pipe connection at an intermediate stage during its installation;
Fig. 4 is a front elevation view of the Figure 1 pipe connection in its sealed state;
Fig. 5 is a longitudinal cross section of the Figure 4 pipe connection along line B-B thereon;
Fig. 6 is a front elevation view of an alternative conventional pre-installed pipe connector for connecting two different diameter pipes;
Fig. 7 is a top perspective view of a first example of a nut with injection molded integral seal in accordance with a first exemplary aspect not forming part of the claimed subject matter;
Fig. 8 is a top plan view of the Figure 7 nut;
Fig. 9 is a longitudinal cross section of the Figure 7 nut along line C-C in Figure 8;
Fig. 10 is a top perspective view of a second example of a nut with injection molded integral seal in accordance with a first exemplary aspect not forming part of the claimed subject matter;
Fig. 11 is a longitudinal cross section of the Figure 10 nut along line D-D in Figure 10;
Fig. 12 is a longitudinal cross section of the Figure 10 nut along line E-E in Figure 10;
Fig. 13 is a top perspective view of a third example of a nut with injection molded integral seal in accordance with a first exemplary aspect not forming part of the claimed subject matter;
Fig. 14 is a top perspective view of a nut body of the Figure 13 nut;
Fig. 15 is a longitudinal cross section of the Figure 13 nut along line F-F in Figure 13;
Fig. 16 is a longitudinal cross section of the Figure 13 nut along line G-G in Figure 13;
Fig. 17A is a front elevation view of a pipe and a Figure 7 nut loosely tightened on a pipe socket before installation;
Fig. 17B is a longitudinal cross section of Figure 17A along line H-H thereon;
Fig. 17C is an enlarged view of the encircled area in Figure 17B;
Fig. 18A is a front elevation view of the pipe after sliding insertion through the Figure 7 nut into the pipe socket before tightening the nut to a sealed state on the pipe socket;
Fig. 18B is a longitudinal cross section of the Figure 18A pipe connection along line I-I thereon;
Fig. 18C is an enlarged view of the encircled area in Figure 18B;
Fig. 19A is a front elevation view of a sealed pipe connection after installation;
Fig. 19B is a longitudinal cross section of the Figure 19A sealed pipe connection along line J-J thereon;
Fig. 19C is an enlarged view of the encircled area in Figure 19B;
Fig. 20 is a perspective view of a pre-installed pipe connection with a ratchet arrangement in accordance with a second exemplary aspect not forming part of the claimed subject matter;
Fig. 21 is a side elevation view of a pipe socket of the Figure 20 pipe connection;
Fig. 22 is a top plan view of the Figure 22 pipe socket;
Fig. 23 is a bottom perspective view of a nut of the Figure 20 pipe connection;
Fig. 24 is a perspective view of the Figure 20 pipe connection in a sealed state;
Fig. 25 is a perspective view of a pre-installed alternative pipe connection with a ratchet arrangement;
Fig. 26 is a perspective view of a pre-installed pipe connection with a Ready-To-Install (RTI) arrangement in accordance with the present invention;
Fig. 27 is a side elevation view of a pipe socket of the Figure 26 pipe connection;
Fig. 28 is a top plan view of the Figure 27 pipe socket;
Fig. 29 is a top perspective view of a nut of the Figure 26 pipe connection;
Fig. 30 is a bottom plan view of the Figure 29 nut;
Fig. 31 is a top plan view of the Figure 26 pipe connection in a ready-to-install state;
Fig. 32 is a top plan view of the Figure 26 pipe connection in a sealed state;
Fig. 33 is a perspective view of a pre-installed alternative RTI pipe connection in accordance with the present invention;
Fig. 34 is a front elevation view of a pre-installed RTI pipe connection including pipe socket and a nut with injection molded integral seal, and ratchet arrangement in accordance with the invention;
Fig. 35 is a front elevation view of the Figure 34 RTI pipe connection's pipe socket;
Fig. 36 is a bottom plan view of the Figure 34's RTI pipe connection's nut with injection molded integral seal;
Fig. 37A is a front elevation view of a pipe and the Figure 34 RTI pipe connection before installation;
Fig. 37B is a longitudinal cross section of the Figure 37A RTI pipe connection along line K-K thereon;
Fig. 37C is an enlarged view of the encircled area in Figure 37B;
Fig. 38A is a front elevation view of the Figure 34 RTI pipe connection after insertion of the pipe before tightening to a sealed state;
Fig. 38B is a longitudinal cross section of the Figure 38A RTI pipe connection along line L-L thereon;
Fig. 38C is an enlarged view of the encircled area in Figure 38B;
Fig. 39A is a front elevation view of a sealed Figure 34 RTI pipe connection after installation;
Fig. 39B is a longitudinal cross section of the Figure 39A sealed pipe connection along line M-M thereon; and
Fig. 39C is an enlarged view of the encircled area in Figure 39B.

### Detailed Description of Drawings

### Conventional pipe connections including discrete seal

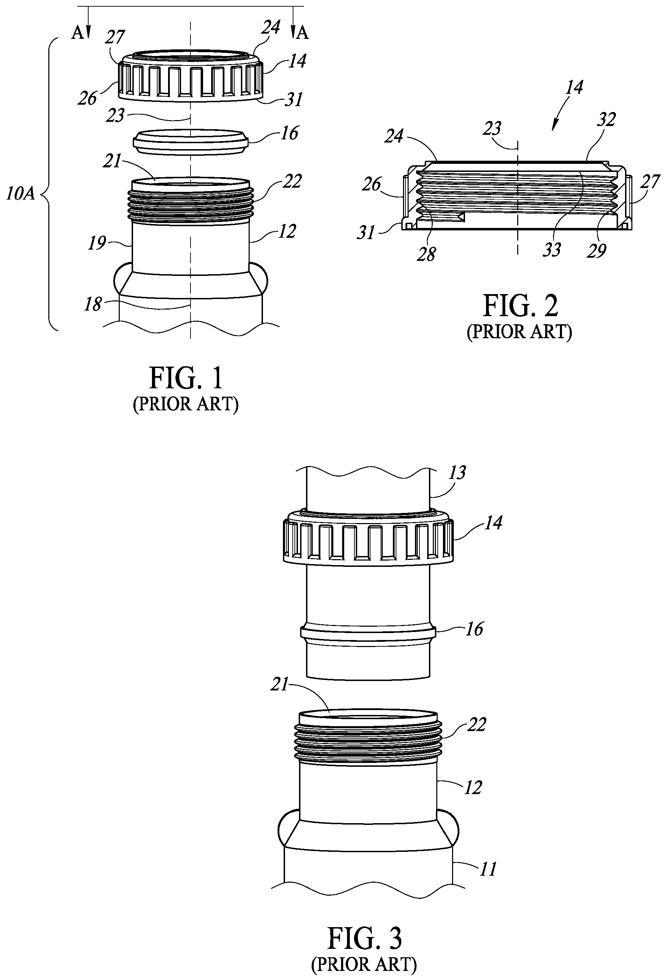

Figure 1 to Figure 5 show a conventional pipe connection 10A for use in gravitational water drainage systems. The pipe connection 10A includes a pipe 11 with a pipe socket 12 for sliding insertion of a pipe 13 thereinto, a discrete nut 14 for tightening onto the pipe socket 12, and a discrete seal 16 for deployment between the pipe socket 12 and the nut 14 for sealing the pipe 13 in the pipe 11. The pipe connection 10A can be designed for use with same or different diameter pipes. Typical pipe connections are 40-40, 40-50, and the like. The pipe 13 has an external pipe diameter D1. The pipe socket 12 and the nut 14 necessarily require matching screw threads. The screw threads can be either a single start screw thread or a multi-start screw thread.

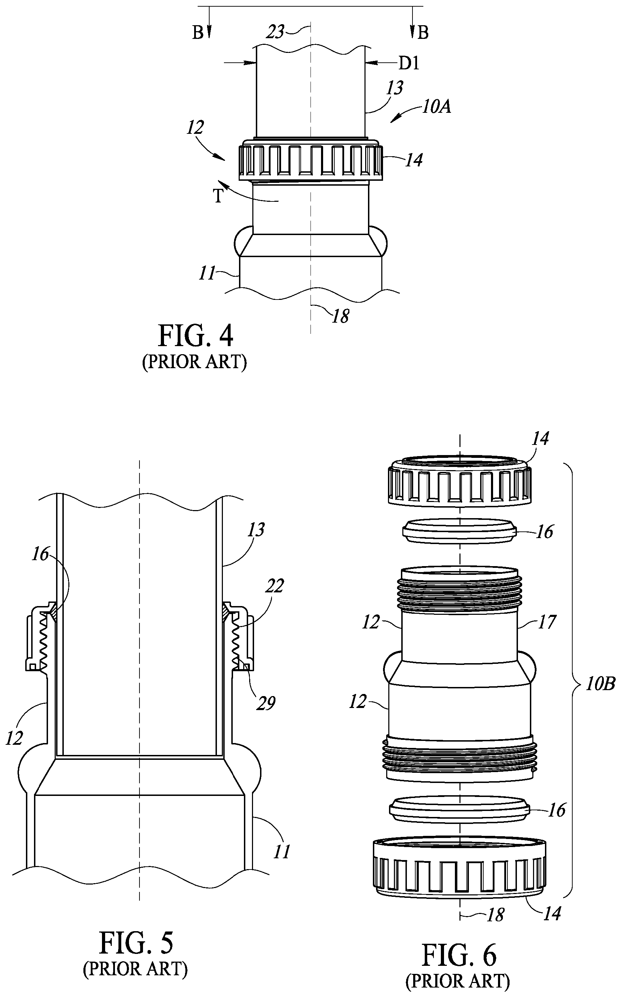

Figure 6 shows an alternative conventional pipe connection 10B having a similar construction to the pipe connection 10A and differing therefrom insofar it includes a pipe connector housing 17 having an opposite pair of pipe sockets 12, a pair of discrete nuts 14 for tightening onto the pipe sockets 12 and a pair of discrete seals 16 deployed between the pipe sockets 12 and the nuts 14.

Reverting to Figure 1 to Figure 5, the pipe socket 12 has a longitudinal pipe socket axis 18 and an external peripheral pipe socket surface 19 co-directional with the longitudinal pipe socket axis 18 and a beveled annular pipe socket end face 21 transverse thereto. The external peripheral pipe socket surface 19 has an external screw thread 22 adjacent the annular pipe socket end face 21.

The nut 14 has a longitudinal nut axis 23 co-axial with the longitudinal pipe socket axis 18 on tightening on the pipe socket 12. The nut 14 has an annular nut rim 24 transverse to the longitudinal nut axis 23 and a peripheral nut wall 26 co-directional therewith. The peripheral nut wall 26 includes an external peripheral nut surface 27 and an internal peripheral nut surface 28. The external peripheral nut surface 27 is ribbed for improved gripping. The internal peripheral nut surface 28 includes an internal screw thread 29 for screw thread engagement with the external screw thread 22. The peripheral nut wall 26 has a peripheral nut wall rim 31 spaced from the annular nut rim 24. The annular nut rim 24 includes an external annular nut rim end face 32 and an internal annular nut rim end face 33 correspondingly facing away from and toward the peripheral nut wall rim 31.

Installation of the pipe connection 10A is now described with reference to Figure 3 to Figure 5. A user slidingly mounts the nut 14 on the pipe 13 with its internal annular nut wall end face 33 facing the pipe 13's free end. The user slidingly mounts a seal 16 on the pipe 13 towards the nut 14. The user slidingly inserts the pipe 13 into the pipe socket 12 until the seal 16 abuts against the annular pipe socket end face 21. The user slides the nut 14 towards the pipe socket 12 and tightens the nut 14 in a clockwise direction to deform the seal 16 such that the seal 16 seals against the annular pipe socket end face 21 and the internal annular nut rim end face 32 thereby sealing the pipe 13 in the pipe connection 10A.

### Nut with injection molded integral seal

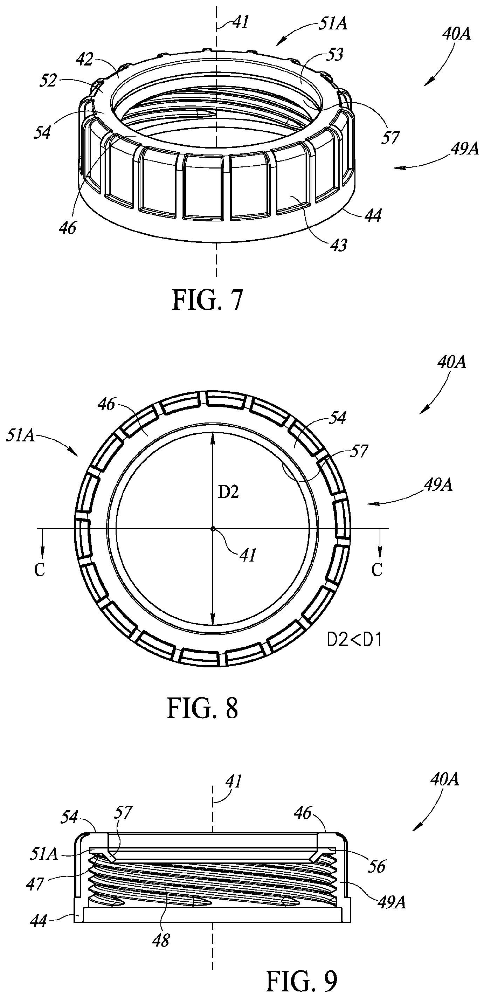

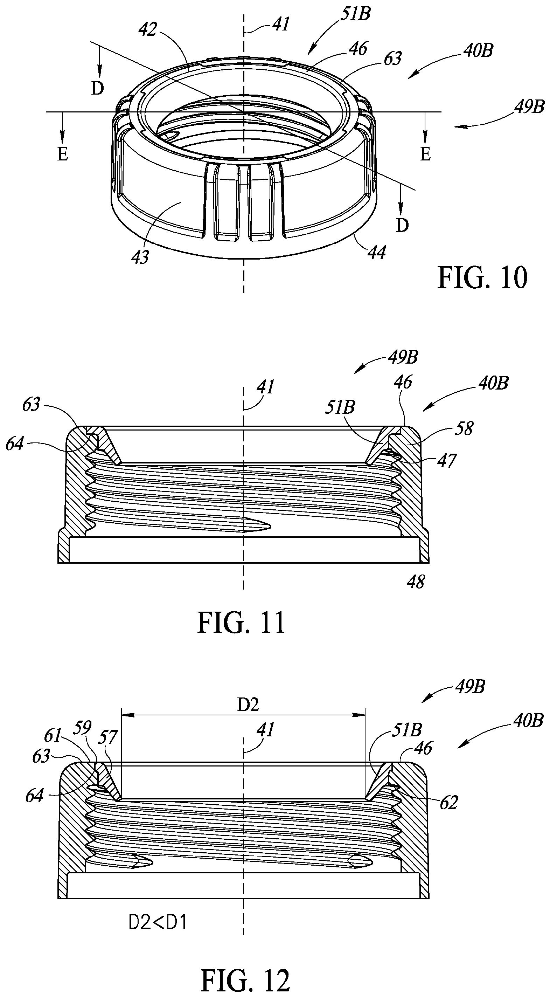

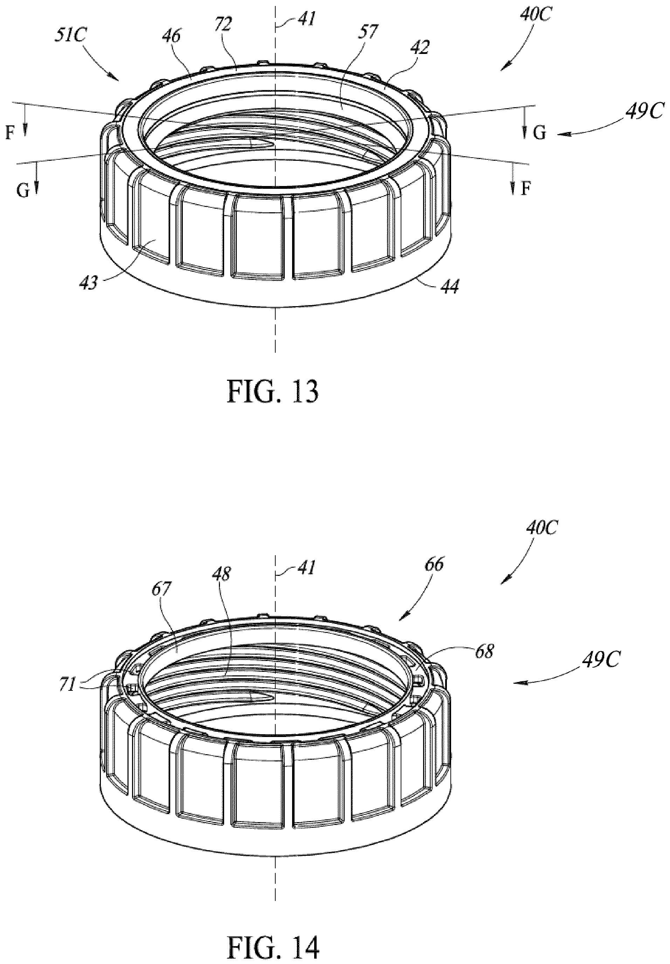

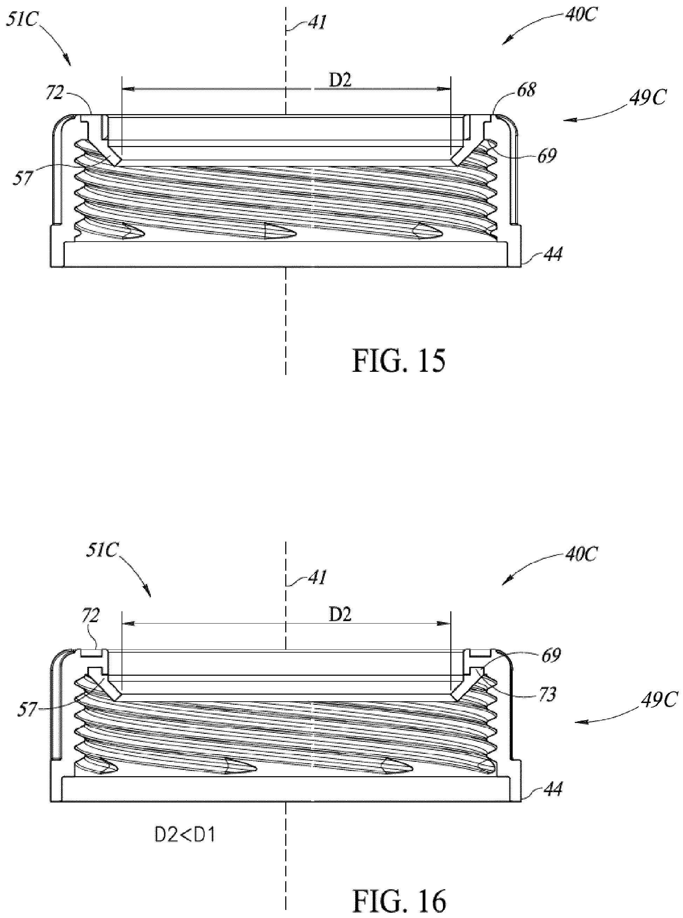

The first exemplary aspect not forming part of the claimed subject matter, but suitable for use with the present invention, is directed towards nuts with injection molded integral seal for replacing a discrete nut and a discrete seal for tightening on a conventional pipe socket. Nuts include a nut body having an injection molded integral seal. Nut bodies are formed from suitable thermoplastic material, for example, polypropylene, and the like. Injection molded integral seals are formed from suitable elastomer sealing material, for example, EPDM, and the like. Nuts with injection molded integral seal can be manufactured by standard injection molding techniques including *inter alia* double shot molding, overmolding, and the like. Figure 7 to Figure 9 show a nut 40A. Figure 10 to Figure 12 show a nut 40B. Figure 13 to Figure 16 show a nut 40C.

Figure 7 to Figure 9 show a nut 40A has a longitudinal nut axis 41 co-axial with a longitudinal pipe socket axis on tightening on a pipe socket. The nut 40A includes an annular nut rim 42 transverse to the longitudinal nut axis 41 and a peripheral nut wall 43 co-directional therewith. The peripheral nut wall 43 has a peripheral nut wall rim 44 spaced from the annular nut rim 42. The annular nut rim 42 includes an external annular nut rim end face 46 and an internal annular nut rim end face 47 correspondingly facing away from and toward the peripheral nut wall rim 44. The peripheral nut wall 43 has an internal screw thread 48 for screw thread engagement with a pipe socket's external screw thread. The nut 40A has a multi-start screw thread for tightening on a pipe socket with a matching multi-start screw thread. A pipe socket and a nut could equally have a matching single start screw thread.

The nut 40A includes a nut body 49A and an injection molded integral seal 51A. The nut body 49A includes the peripheral nut wall 43 and an annular nut body rim 52. The annular nut body rim 52 has an internal annular nut body rim peripheral surface 53 co-directional with and facing the longitudinal nut axis 41, and an external annular nut body rim end face 54 and an internal annular nut body rim end face 56 correspondingly facing away from and toward the peripheral nut wall rim 44.

The nut 40A is manufactured with the injection molded integral seal 51A injection molded onto the internal annular nut body end face 56 such that the external annular nut body rim end face 54 constitutes the external annular nut rim end face 46 and the injection molded integral seal 51A constitutes the internal annular rim end face 47. The injection molded integral seal 51A includes an inward radial directed deformable collar 57 extending radially inward beyond the internal annular nut body rim peripheral surface 53 towards the longitudinal nut axis 41. The inward radial directed deformable collar 57 has a non-deformed internal diameter D2 where D2<D1.

Figure 10 to Figure 12 show a nut 40B having a similar construction as the nut 40A and therefore similar parts are likewise numbered. The nut 40B differs from the nut 40A in terms of its nut body 49B and its injection molded integral seal 51B. The nut body 49B includes the peripheral nut wall 43 and an annular nut body rim 58 transverse to the longitudinal nut axis 41. The annular nut body rim 58 has an internal annular nut body rim peripheral surface 59 co-directional with and facing the longitudinal nut axis 41. The annular nut body rim 58 has an external annular nut body rim end face 61 and an internal annular nut body rim end face 62 correspondingly facing away from and toward the peripheral nut wall rim 44. The internal annular nut body rim peripheral surface 59 extends less towards the longitudinal nut axis 41 than the internal annular nut body rim peripheral surface 53. The external annular nut body rim end face 61 includes an outer ring 63 and an inner ring 64 recessed with respect to the outer ring 63 toward the peripheral nut wall rim 44. The nut 40B is manufactured with the injection molded integral seal 51B injection molded on the nut body 49B such that the injection molded integral seal 51B lines the internal annular nut body rim peripheral surface 59 and the external annular nut body rim end face's inner ring 64 such that the external annular nut body rim end face's outer ring 63 and the injection molded integral seal 51B constitute the external annular nut rim end face 46.

Figure 13 to Figure 16 show a nut 40C which differs from the nut 40A in terms of its nut body 49C and its injection molded integral seal 51C. The nut body 49C includes the peripheral nut wall 43 and an annular nut body rim 66 transverse to the longitudinal nut axis 41. The annular nut body rim 66 has an internal annular nut body rim peripheral surface 67 co-directional with and facing the longitudinal nut axis 41. The annular nut body rim 66 has an external annular nut body rim end face 68 and an internal annular nut body rim end face 69 correspondingly facing away from and toward the peripheral nut wall rim 44. The annular nut body rim 66 includes multiple circumferentially spaced apart throughgoing apertures 71 extending between the external annular nut body rim end face 68 and the internal annular nut body rim end face 69. The nut 40C is injection molded such that the injection molded integral seal 51C extends through the multiple circumferentially spaced throughgoing apertures 71 and has an external annular seal end face 72 overlying the external annular nut rim body end face 68 and an internal annular seal end face 73 underlying the internal annular nut rim body end face 69 such that the injection molded integral seal 51C embeds the annular nut body rim 66 therein. Accordingly, the external annular seal end face 72 constitutes the external annular nut rim end face 46.

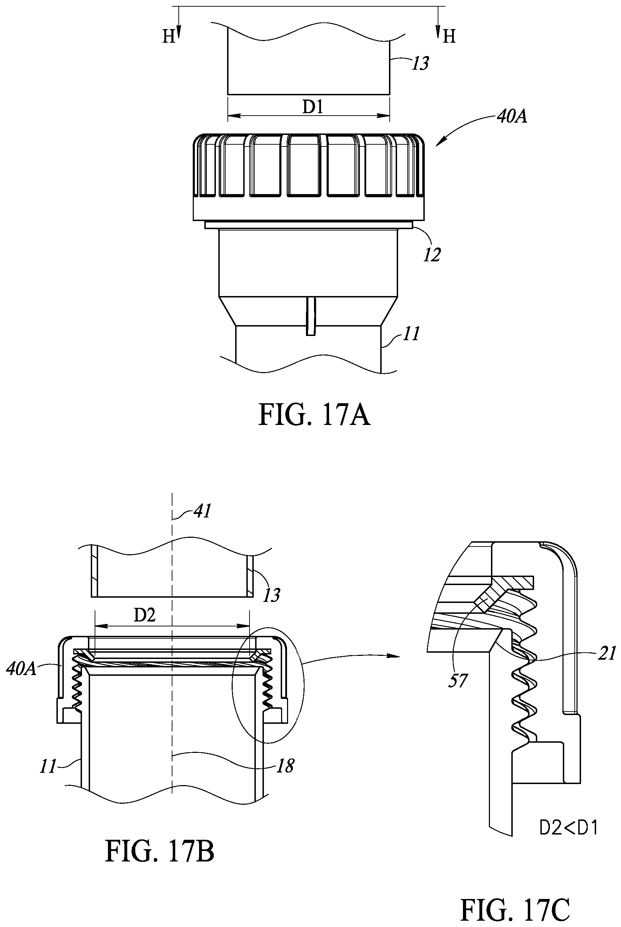

Figure 17 to Figure 19 show tightening a nut 40A on a conventional pipe socket 12 to seal a pipe connection.

Figure 17A to Figure 17C show the nut 40A loosely tightened on the pipe socket 12. The injection molded integral seal's inward radial directed deformable collar 57 inwardly protrudes beyond the pipe socket's annular pipe socket end face 21.

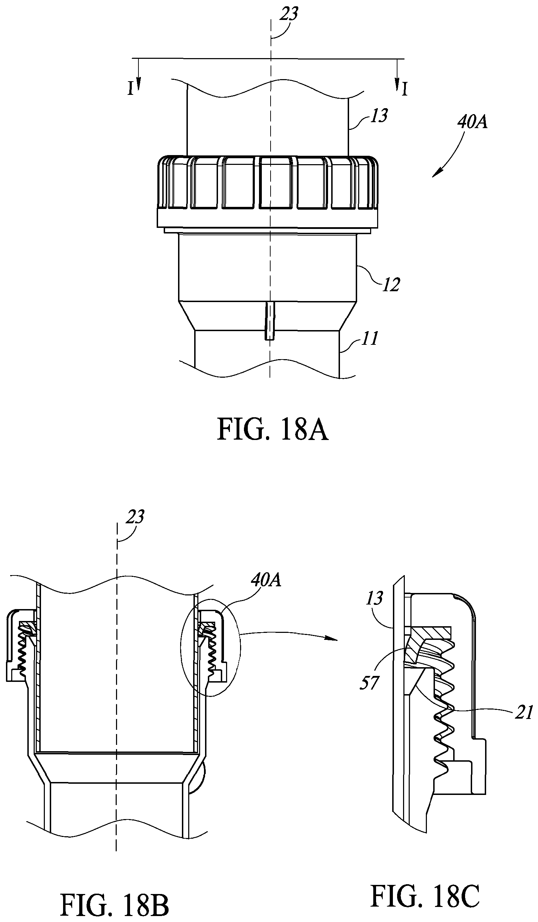

Figure 18A to Figure 18C show the pipe 13 after its sliding insertion through the nut 40A into the pipe socket 12. The pipe 13 freely slides through the nut 40A and outwardly radially deforms the inward radial directed deformable collar 57 away from the longitudinal nut axis 41. Figure 18B and Figure 18C show the inward radial directed deformable collar 57 bears on the pipe 13.

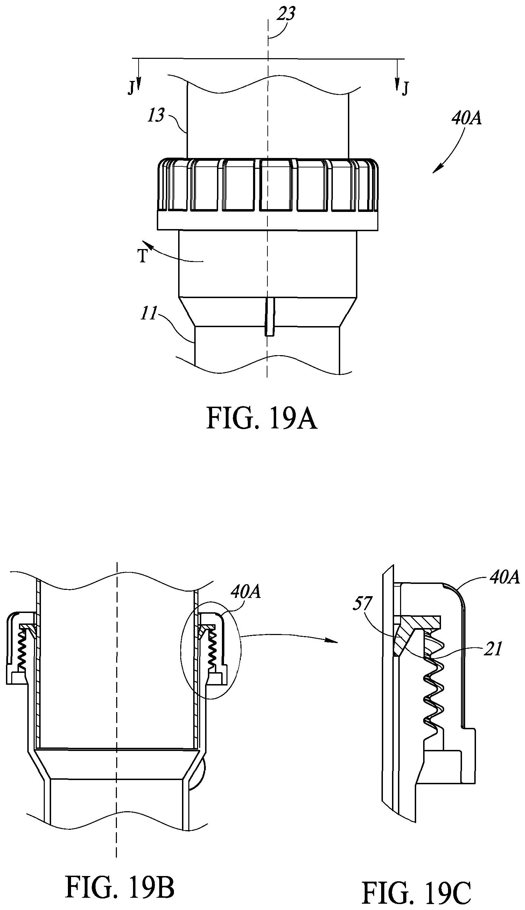

Figure 19A to Figure 19C show tightening the nut 40A in a clockwise direction T on the pipe socket 12 to seal the pipe 13. Figure 19B and Figure 19C show the nut 40A further deforms the inward radial directed deformable collar 57 to seal against the beveled annular pipe socket end face 21.

### Pipe connections with ratchet arrangement

The second exemplary aspect not forming part of the claimed subject matter, but suitable for use with the present invention, is directed towards pipe connections with a ratchet arrangement for securing a pipe connection in a sealed state. Ratchet arrangements are designed such that a loosening torque for loosening a pipe connection from a sealed state is greater than a tightening torque for tightening the pipe connection into the sealed state. A loosening torque is preferably at least twice as great as a tightening torque for any given diameter of pipe connection. Ratchet arrangements can be designed such that a loosening torque is four times greater than a tightening torque or even greater.

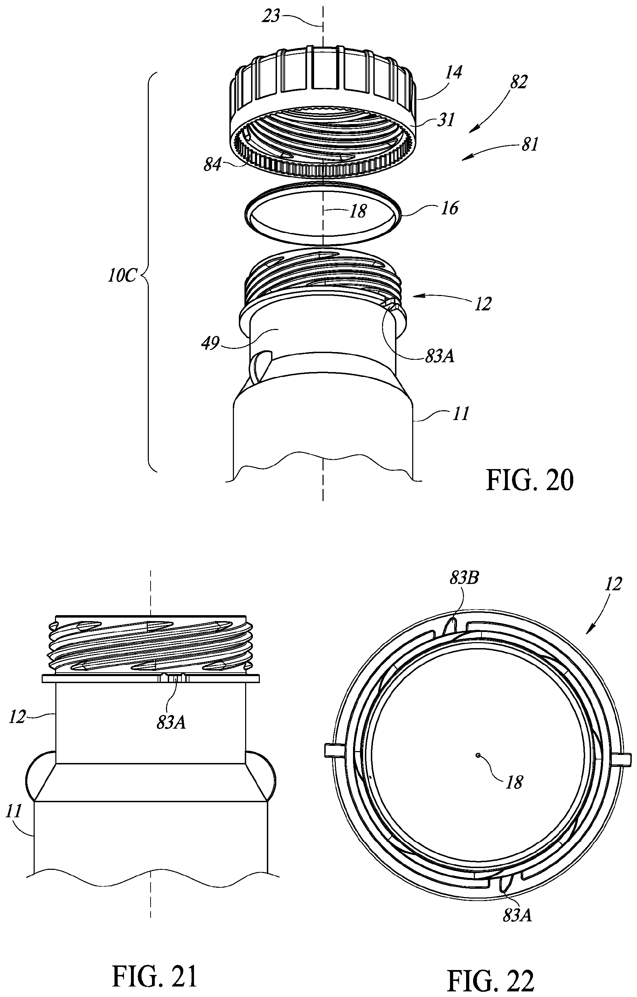

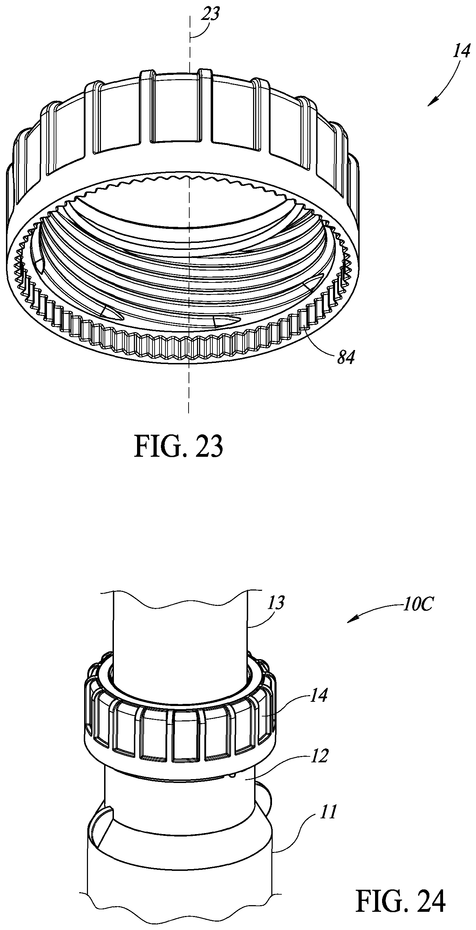

Figure 20 to Figure 24 shows a pipe connection 10C similar to the pipe connection 10A and therefore similar parts are likewise numbered. The pipe connection 10C differs from the pipe connection 10A insofar as the pipe connection 10C includes a multi-start screw thread 81 and a ratchet arrangement 82. The pipe connection 10C can equally include a single start screw thread. The pipe socket 12 has a diametric pair of outward directed teeth 83A and 83B below its external screw thread 22. The nut 14 has an internal ratchet wheel 84 at its peripheral nut wall rim 31. After sliding insertion of the pipe 13 through the nut 14 and into the pipe socket 12, and tightening the nut 14 on the pipe socket 12, the diametric pair of outward directed teeth 83A and 83B engage the internal ratchet wheel 84.

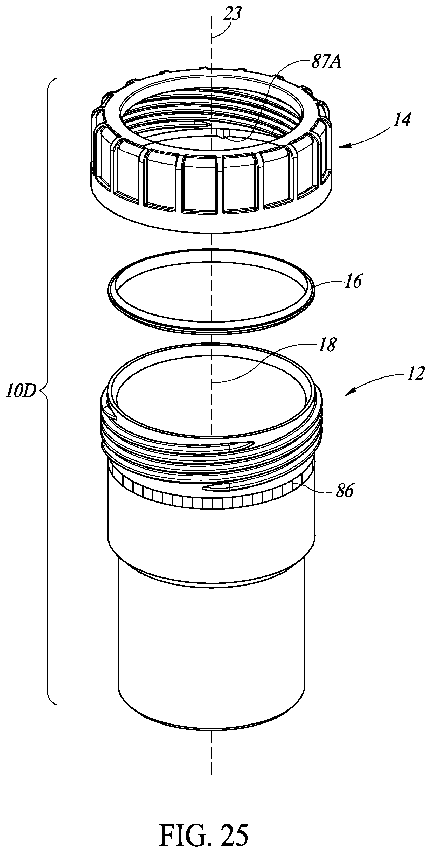

Figure 25 shows a pipe connection 10D similar to the pipe connection 10C and differing therefrom in terms of the construction of the ratchet arrangement 82 which is reversed. The pipe socket 12 has an external ratchet wheel 86 and the nut 14 has a diametric pair of inward directed teeth 87A and 87B for engaging the external ratchet wheel 86 on tightening the nut 14 on the pipe socket 12.

### Pipe connections with Ready-to-Install (RTI) arrangement

The present invention is directed towards pipe connections with a Ready-To-Install (RTI) arrangement for enabling factory assembly of a pipe connection in a ready-to-install state and providing a visual indication that a pipe connection has been tightened from a ready-to-install state to a sealed state. Such visual indication is of particular importance to preclude sliding insertion of a pipe end into a ready-to-install pipe connection which is then inadvertently not tightened to a sealed state which would lead to leakage. Such visual indication is also of particular importance for readily enabling visual inspection of a pipe connection.

The intention of the "ready-to-install" term is that a nut is supplied on a pipe socket in such a manner that a pipe end can still be readily inserted through a nut into a pipe socket without having to loosen the nut. At the same time, the nut is supplied on a pipe socket in such a manner that a minimum rotation of a nut is required to tighten the pipe connection from a ready-to-install state to a sealed state. The minimum rotation depends on whether a pipe connection has a single start screw thread or a multi-start screw thread. The larger the number of starts of a multi-start screw thread so a smaller rotation is required from a ready-to-install state to a sealed state. A single start screw thread typically requires about a full turn from a ready-to-install state to a sealed state. A four start screw thread typically requires a quarter turn from a ready-to-install state to a sealed state.

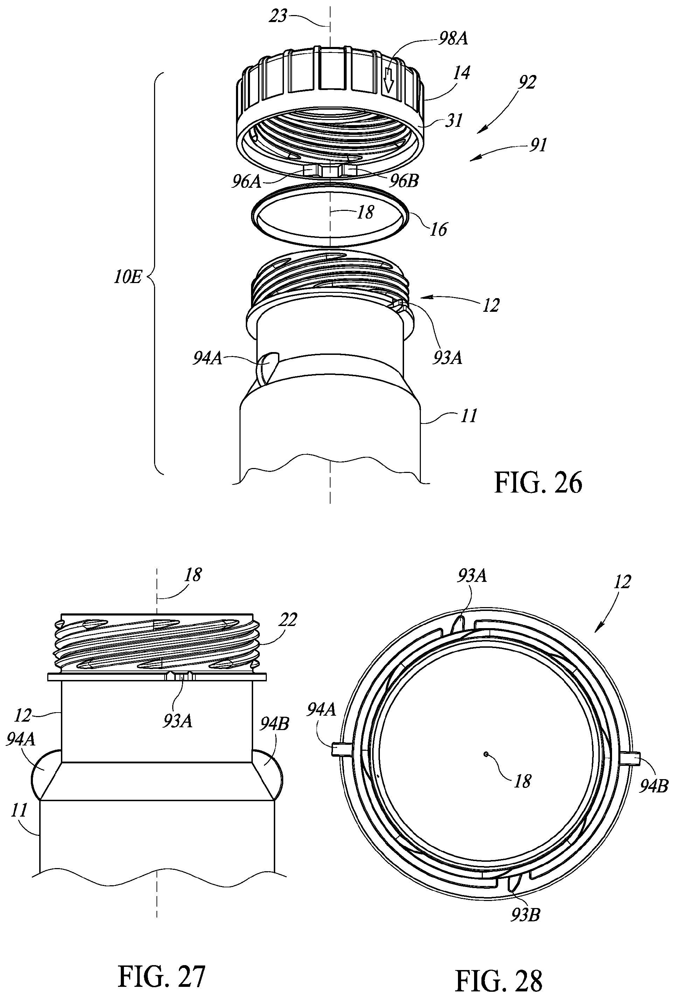

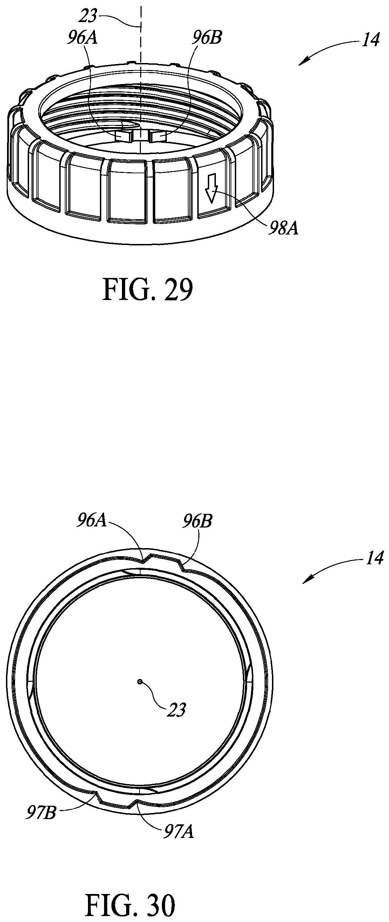

Figure 26 to Figure 32 shows a Ready-To-Install (RTI) pipe connection 10E similar to the pipe connection 10A and therefore similar parts are likewise numbered. The RTI pipe connection 10E differs from the pipe connection 10A insofar as the RTI pipe connection 10E includes a multi-start screw thread 91 and a RTI arrangement 92. The RTI pipe connection 10E can equally include a single start screw thread. The pipe socket 12 has a diametric pair of outward directed teeth 93A and 93B below its external screw thread 22. The pipe socket 12 has a diametric pair of longitudinal directed markers 94A and 94B. The nut 14 has a first spaced apart pair of inward directed rotation stops 96A and 96B and a second spaced apart pair of inward directed rotation stops 97A and 97B diametric to the first spaced apart pair of inward directed rotation stops 96A and 96B at its peripheral nut wall rim 31. The nut 14 has a diametric pair of longitudinal directed markers 98A and 98B.

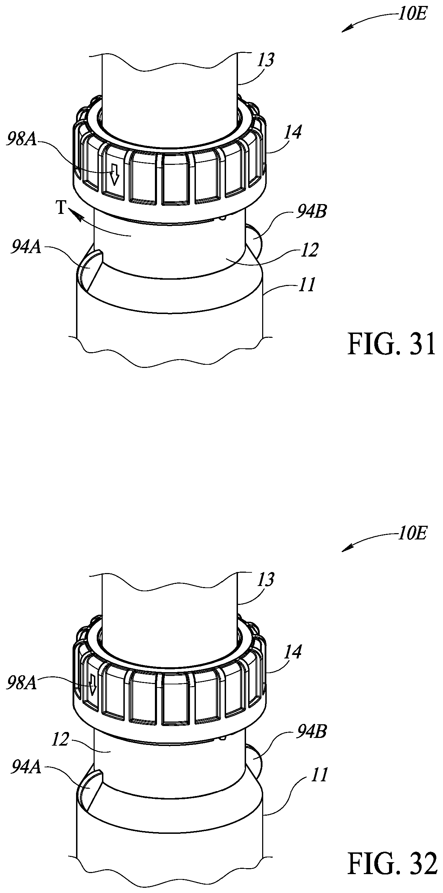

In the RTI pipe connection 10E's ready-to-install state, the pipe socket's diametric pair of outward directed teeth 93 are correspondingly deployed between the nut's first spaced apart pair of inward directed rotation stops 96A and 96B and the second spaced apart pair of inward directed rotation stops 97A and 97B. Figure 31 shows the nut's diametric pair of longitudinal directed markers 98A and 98B are right of the pipe socket's diametric pair of longitudinal directed markers 94A and 94B. The rotation stops 96A and 97A prevent unforced loosening of the nut 14 from the pipe socket. The rotation stops 96B and 97B prevent unforced applying a sealing force to the seal 16. The rotation stops 96A and 97A can be overcome on application of a sufficient loosening torque. The rotation stops 96B and 97B can be overcome on application of a sufficient tightening torque.

On tightening the nut 14 on the pipe socket 12 in a clockwise direction T from its ready-to-install state to its sealed state, the nut 14 rotates past the rotation stops 96B and 97B. Figure 32 shows the nut's diametric pair of longitudinal directed markers 98A and 98B are left of the pipe socket's diametric pair of longitudinal directed markers 94A and 94B indicating the pipe connection 10E is in its sealed state.

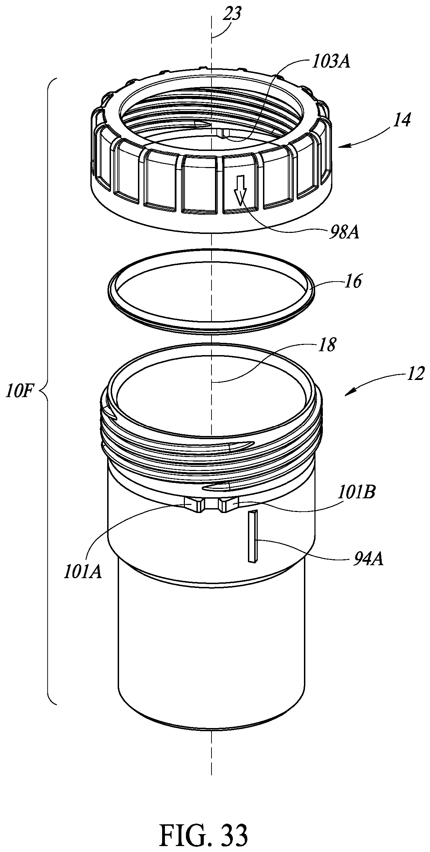

Figure 33 shows a RTI pipe connection 10F similar to the RTI pipe connection 10E and differing therefrom in terms of the construction of the ready-to-install arrangement which is reversed. The pipe socket 12 has a first spaced apart pair of outward directed rotation stops 101A and 101B and a second spaced apart pair of outward directed rotation stops 102A and 102B (not shown) diametric to the first spaced apart pair of outward directed rotation stops 101A and 101B. The nut 14 has a diametric pair of inward directed teeth 103A and 103B (not shown) for deployment between the first spaced apart pair of outward directed rotation stops 101A and 101B and the second spaced apart pair of outward directed rotation stops 102A and 102B.

### Pipe connections including nut having injection molded integral seal, ratchet arrangement and Ready-to-Install (RTI) arrangement

Pipe connections can be preferably implemented combining the hereinabove described three aspects, namely, a nut with injection molded integral seal, a ratchet arrangement and a Ready-to-Install (RTI) arrangement. Such RTI pipe connections preferably include multi-start screw threads as opposed to single start screw threads. Such RTI pipe connections can include a nut with injection molded integral seal along the teachings of Figure 7 to Figure 9's nut 40A or Figure 10 to Figure's 12 nut 40B or Figure 13 to Figure 16's nut 40C. Such RTI pipe connections preferably include a nut having a diametric pair of outward directed teeth deployed for initially setting a RTI pipe connection in a ready-to-install state and thereafter for securing a RTI pipe connection in a sealed state.

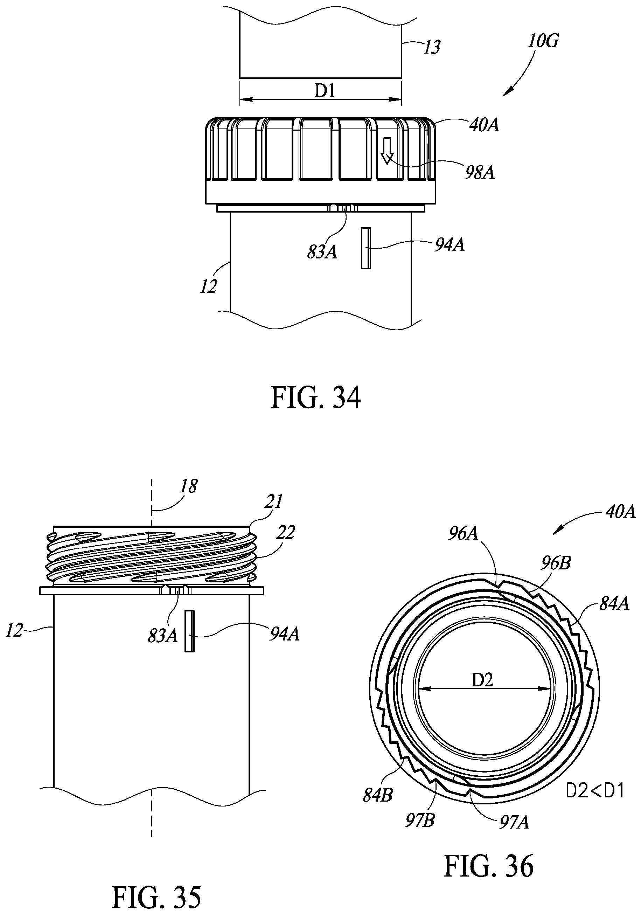

Figure 34 shows a RTI pipe connection 10G incorporating features of the nut with injection molded integral seal 40A (hereinafter abbreviated to nut 40A), the pipe connection 10C and the RTI pipe connection 10E. Accordingly, similar parts are likewise numbered.

Figure 35 shows the RTI pipe connection 10G includes a pipe socket 12 having a diametric pair of outward directed teeth 83A and 83B (not shown). The pipe socket 12 includes a diametric pair of longitudinal directed markers 94A and 94B (not shown).

Figure 36 shows the RTI pipe connection 10G include a 40A with injection molded integral seal 51A having the inward radial directed deformable collar 57. The nut 40A includes a diametric pair of internal ratchet wheel sections 84A and 84B at its peripheral nut wall rim 31. The nut 40A includes a first pair of inward directed rotation stops 96A and 96B and a second pair of inward directed rotation stops diametric pair 97A and 97B diametric to the first pair of inward directed rotation stops 96A and 96B at its peripheral nut wall rim 31. The nut 40A includes a diametric pair of longitudinal directed markers 98A and 98B (not shown).

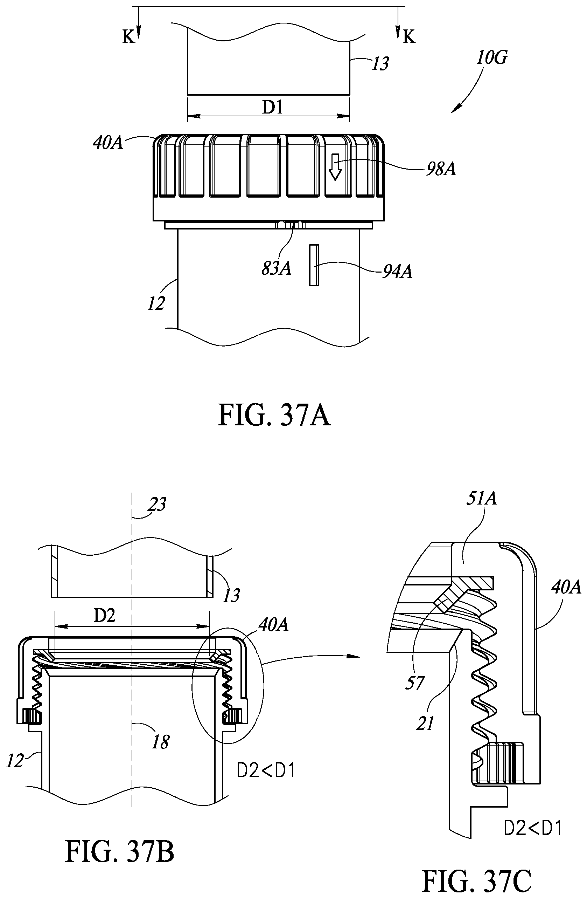

Figure 37 to Figure 39 show the use of the RTI pipe connection 10G as follows:
Figure 37A to Figure 37C show the nut 40A loosely tightened on the pipe socket 12 in a ready-to-install state. The pipe socket's diametric pair of outward directed teeth 83A and 83B are correspondingly deployed between the first pair of inward directed rotation stops 96A and 96B and the second pair of inward directed rotation stops 97A and 97B. The injection molded integral seal's inward radial directed deformable collar 57 inwardly protrudes beyond the pipe socket's annular pipe socket end face 21. The nut's diametric pair of longitudinal directed markers 98A and 98B are right of the pipe socket's diametric pair of longitudinal directed markers 94A and 94B.

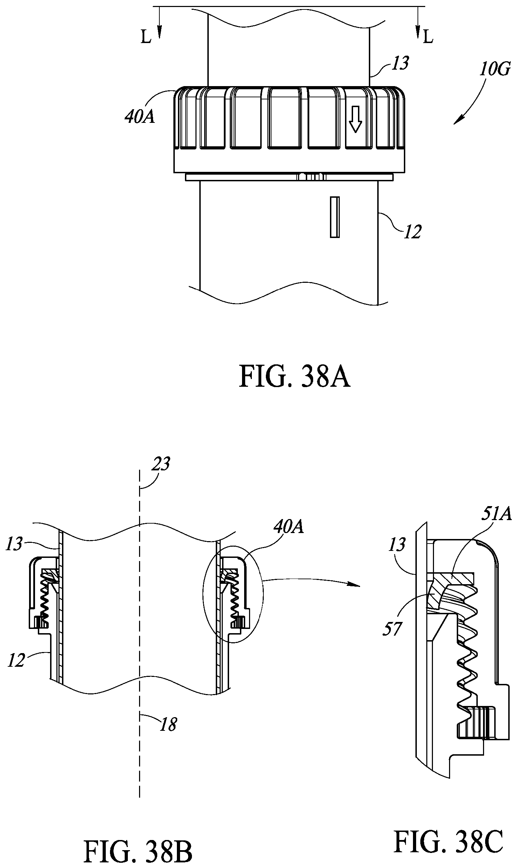

Figure 38A to Figure 38C show the pipe 13 after its sliding insertion through the nut 40A into the pipe socket 12. The pipe 13 freely slides through the nut 40A and outwardly radially deforms the inward radial directed deformable collar 57 away from the longitudinal nut axis 41. Figure 38B and Figure 38C show the inward radial directed deformable collar 57 bears on the pipe 13.

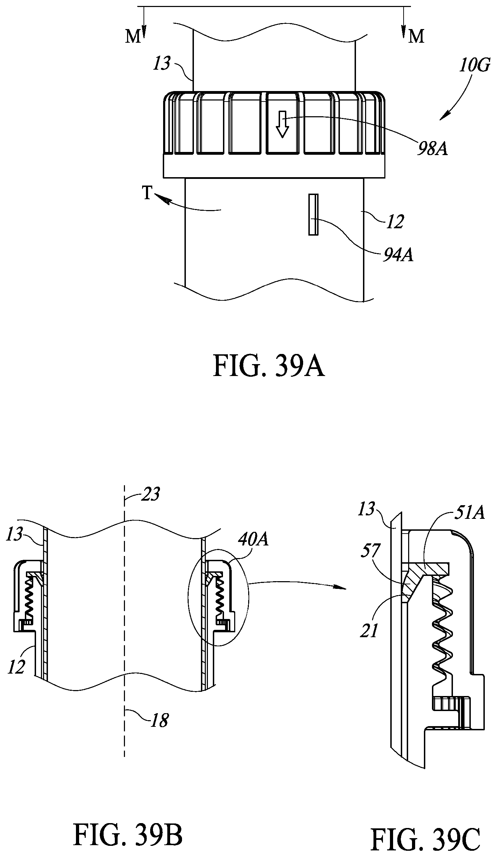

Figure 39A to Figure 39C show tightening the nut 40A in a clockwise direction T on the pipe socket 12 to seal the pipe connection 10G. Figure 39B and Figure 39C show the nut 40A further deforms the inward radial directed deformable collar 57 to seal against the beveled annular pipe socket end face 21. The pipe socket's diametric pair of outward directed teeth 83A and 83B are correspondingly forced past the inward directed rotation stop 96B and the inward directed rotation stop 97B to correspondingly engage the internal ratchet wheel sections 84A and 84B to secure the RTI pipe connection 10G in its sealed state. The nut's diametric pair of longitudinal directed markers 98A and 98B are left of the pipe socket's diametric pair of longitudinal directed markers 94A and 94B indicating that the pipe connection 10G is in its sealed state.

### Part List

| | |
|---|---|
| 10A-10B | Prior art pipe connection |
| 10C | Pipe connection with ratchet arrangement (Figures 20-24) |
| 10D | Alternative pipe connection with ratchet arrangement (Figure 25) |
| 10E | Pipe connection with RTI arrangement (Figures 26-32) |
| 10F | Pipe connection with alternative RTI arrangement (Figure 33) |
| 10G | Pipe connection with RTI, integral seal and ratchet arrangement (Figures 34-39) |

| | |
|---|---|
| 40A-C | Nut |
| 41 | Longitudinal nut axis |
| 42 | Annular nut rim |
| 43 | Peripheral nut wall |
| 44 | Peripheral nut wall rim |
| 46 | External annular nut rim end face |
| 47 | Internal annular nut rim end face |
| 48 | Internal screw thread |
| 49A-C | Nut body |
| 51A-C | Injection molded integral seal |
| 57 | Inward radial directed deformable collar |
| Embodiment 1 | Figures 7 to 9: Nut 40A including nut body 49A and integral seal 51A |
| 52 | Annular nut body rim |
| 53 | Internal annular nut body rim peripheral face |
| 54 | External annular nut body rim end face |
| 56 | Internal annular nut body rim end face |
| 57 | Inward radial directed deformable collar |
| Embodiment 2 | Figures 10 to 12: Nut 40B including nut body 49B and integral seal 51B |
| 58 | Annular nut body rim |
| 59 | Internal annular nut body rim peripheral face |
| 61 | External annular nut body rim end face |
| 62 | Internal annular nut body rim end face |
| 63 | External annular nut body rim end face's outer ring |
| 64 | External annular nut body rim end face's inner ring |
| Embodiment 3 | Figures 13 to 16: Nut 40C including nut body 49C and integral seal 51C |
| 66 | Annular nut body rim |
| 67 | Internal annular nut body rim peripheral face |
| 68 | External annular nut body rim end face |
| 69 | Internal annular nut body rim end face |
| 71 | multiple circumferentially spaced throughgoing apertures |
| 72 | external annular seal end face |
| 73 | internal annular seal end face |

## Claims

1. A pipe connection (10E; 10F; 10G) for use with a pipe (13) having an external pipe diameter D1 and a pipe end, the pipe connection comprising:
(a) a pipe socket (12) for sliding insertion of the pipe end thereinto, said pipe socket having a longitudinal pipe socket axis (18) and a peripheral pipe socket surface (19) co-directional with said longitudinal pipe socket axis and an annular pipe socket end face (21) transverse to said longitudinal pipe socket axis, said peripheral pipe socket surface having an external screw thread (22) adjacent the annular pipe socket end face;
(b) a nut (14; 40A; 40B; 40C) for tightening on said pipe socket to seal the pipe end (13) in the pipe connection, said nut having a longitudinal nut axis (41) co-axial with said longitudinal pipe socket axis on tightening said nut on said pipe socket, said nut having a peripheral nut wall (43) co-directional with said longitudinal nut axis and an annular nut rim (42) transverse thereto, said peripheral nut wall having a peripheral nut wall rim (44) spaced from said annular nut rim, said peripheral nut wall having an internal screw thread (48) for screw thread engagement with said external screw thread;
(c) a seal (16; 51A; 51B; 51C) deployed between said nut and said pipe socket for sealing the pipe connection in a sealed state on tightening said nut on said pipe socket; and
(d) a ready-to-install arrangement (92) for enabling initial factory assembly of the pipe connection in a ready-to-install state;
said ready-to-install arrangement including a tooth deployed between a spaced apart pair of rotation stops such that there is rotational play of said nut on said pipe socket in said ready-to-install state for preventing loosening of the pipe connection in the absence of a sufficient loosening torque to overcome the resistance provided by the tooth acting against one of the rotation stops on a loosening rotation of said nut relative to said pipe socket, and preventing the application of a sealing force to said seal in the absence of a sufficient tightening torque to overcome the resistance provided by the tooth acting against the other rotation stop on an opposite tightening rotation of said nut relative to said pipe socket, while enabling the pipe end to be readily inserted through said nut into said pipe socket without having to loosen said nut, and
said ready-to-install arrangement configured to provide a visual indication the pipe connection has been subsequently tightened from said ready-to-install state to said sealed state.

2. The pipe connection according to claim 1 wherein said peripheral nut wall rim (44) includes a spaced apart pair of inward directed rotation stops (96A, 96B; 97A, 97B) and said pipe socket includes an outward directed tooth (93A, 93B) deployed between said spaced apart pair of inward directed rotation stops in said ready-to-install state.

3. The pipe connection according to claim 1 and further comprising at least one ratchet arrangement having a loosening torque for loosening the pipe connection from said sealed state greater than a tightening torque for tightening the pipe connection into said sealed state,
wherein said peripheral nut wall rim (44) includes a spaced apart pair of inward directed rotation stops (96A, 96B; 97A, 97B) and an internal ratchet wheel (84), and
said pipe socket includes an outward directed tooth (83A, 83B) initially deployed between said spaced apart pair of inward directed rotation stops in said ready-to-install state and thereafter engaging said internal ratchet wheel on tightening the pipe connection from said ready-to-install state to said sealed state.

4. The pipe connection according to any one of claims 1 to 3, wherein said pipe socket includes a diametric pair of longitudinal directed pipe socket markers (94A, 94B) and said nut includes a diametric pair of longitudinal directed nut markers (98A, 98B) wherein said diametric pair of nut markers are in one rotational position relative to said diametric pair of pipe socket markers in said ready-to-install state and said diametric pair of nut markers are in another rotational position relative to said diametric pair of pipe socket markers on sufficiently tightening said nut to said sealed state on said pipe socket to provide said visual indication that the pipe connection has been subsequently tightened from said ready-to-install state to said sealed state.

5. The pipe connection according to any one of claims 1 to 4 wherein said nut is manufactured by double shot injection molding and includes an injection molded nut body and an injection molded integral seal overmolded on said nut body and constituting said seal,
said nut body including said peripheral nut wall (43) and an annular nut body rim (52; 58; 66) transverse to said longitudinal nut axis,
said annular nut body rim having an internal annular nut body rim peripheral surface co-directional with said longitudinal nut axis, an external annular nut body rim end face facing away from said peripheral nut wall rim and an internal annular nut body rim end face facing toward said peripheral nut wall rim, and
said overmolded integral seal having an inward radial directed deformable collar having a non-deformed internal diameter D2 where D1>D2 such that inserting the pipe end through said nut into said pipe socket radially outwardly deforms said inward radial directed deformable collar away from said longitudinal nut axis and subsequent tightening said nut on said pipe socket to said sealing state, further deforms said inward radial directed deformable collar to seal the pipe end in the pipe connection.

6. The pipe connection according to claim 5 wherein said overmolded integral seal is injection molded on said internal annular nut body rim end face such that said external annular nut body rim end face constitutes said external annular nut rim end face.

7. The pipe connection according to claim 5 wherein said external annular nut body rim end face includes an outer ring and an inner ring recessed with respect to said outer ring toward said peripheral nut wall rim and said overmolded integral seal is injection molded on said annular nut body rim such that said overmolded integral seal lines said internal annular nut body rim peripheral surface and said external annular nut body rim end face's inner ring such that said external annular nut body rim end face's outer ring and said overmolded integral seal constitute said external annular nut rim end face.

8. The pipe connection according to claim 5 wherein said annular nut body rim includes multiple circumferentially spaced apart throughgoing apertures extending between said external annular nut body rim end face and said internal annular nut body rim end face, and said overmolded integral seal is injection molded on said annular nut body rim such that overmolded integral seal embeds said annular nut body rim therein such that said overmolded integral seal constitutes said external annular nut rim end face.

## Patentansprüche

1. Rohrverbindung (10E; 10F; 10G) zur Verwendung mit einem Rohr (13), das einen äußeren Rohrdurchmesser D1 und ein Rohrende aufweist, wobei die Rohrverbindung Folgendes umfasst:
(a) eine Rohrmuffe (12) zum gleitenden Einsetzen des Rohrendes darin, wobei die Rohrmuffe eine Rohrmuffenlängsachse (18) und eine Rohrmuffenumfangsoberfläche (19), die gleichgerichtet zu der Rohrmuffenlängsachse ist, und eine ringförmige Rohrmuffenendfläche (21) quer zu der Rohrmuffenlängsachse aufweist, wobei die Rohrmuffenumfangsoberfläche ein äußeres Schraubgewinde (22) benachbart zu der ringförmigen Rohrmuffenendfläche aufweist;
(b) eine Mutter (14; 40A; 40B; 40C) zum Anziehen an der Rohrmuffe, um das Rohrende (13) in der Rohrverbindung abzudichten, wobei die Mutter beim Anziehen der Mutter an der Rohrmuffe eine zur Rohrmuffenlängsachse koaxiale Mutternlängsachse (41) aufweist, wobei die Mutter eine zur Mutternlängsachse gleichgerichtete Mutternumfangswand (43) und einen dazu quer verlaufenden ringförmigen Mutternrand (42) aufweist, wobei die Mutternumfangswand einen von dem ringförmigen Mutternrand beabstandeten Mutternumfangswandrand (44) aufweist, wobei die Mutternumfangswand ein inneres Schraubgewinde (48) zum Schraubgewindeeingriff mit dem äußeren Schraubgewinde aufweist;
(c) eine Dichtung (16; 51A; 51B; 51C), die zwischen der Mutter und der Rohrmuffe eingebracht wird, um die Rohrverbindung in einem abgedichteten Zustand beim Anziehen der Mutter an der Rohrmuffe abzudichten; und
(d) eine installationsfertige Anordnung (92) zum Ermöglichen einer werkseitigen Erstmontage der Rohrverbindung in einem installationsfertigen Zustand;
wobei die installationsfertige Anordnung eine Zacke aufweist, die zwischen einem beabstandeten Paar von Drehanschlägen eingebracht ist, sodass in dem installationsfertigen Zustand ein Drehspiel der Mutter auf der Rohrmuffe vorhanden ist, um ein Lösen der Rohrverbindung zu verhindern, wenn kein ausreichendes Lösedrehmoment vorhanden ist, um den Widerstand zu überwinden, der durch die Zacke bereitgestellt wird, die bei einer Lösungsdrehung der Mutter relativ zu der Rohrmuffe gegen einen der Drehanschläge wirkt, und um das Aufbringen einer Dichtkraft auf die Dichtung zu verhindern, wenn kein ausreichendes Anzugsdrehmoment vorhanden ist, um den Widerstand zu überwinden, der durch die Zacke bereitgestellt wird, die bei einer entgegengesetzten Anzugsdrehung der Mutter relativ zu der Rohrmuffe gegen den anderen Drehanschlag wirkt, während ermöglicht wird, dass das Rohrende leicht durch die Mutter in die Rohrmuffe eingesetzt werden kann, ohne die Mutter lösen zu müssen, und
wobei die installationsfertige Anordnung dazu konfiguriert ist, eine visuelle Angabe bereitzustellen, dass die Rohrverbindung anschließend aus dem installationsfertigen Zustand in den abgedichteten Zustand angezogen wurde.

2. Rohrverbindung nach Anspruch 1, wobei der Mutternumfangswandrand (44) ein beabstandetes Paar von nach innen gerichteten Drehanschlägen (96A, 96B; 97A, 97B) enthält und die Rohrmuffe eine nach außen gerichtete Zacke (93A, 93B) enthält, die zwischen dem beabstandeten Paar von nach innen gerichteten Drehanschlägen in dem installationsfertigen Zustand eingebracht ist.

3. Rohrverbindung nach Anspruch 1 und ferner umfassend mindestens eine Sperrklinkenanordnung mit einem Lösedrehmoment zum Lösen der Rohrverbindung aus dem abgedichteten Zustand, das größer ist als ein Anzugsdrehmoment zum Anziehen der Rohrverbindung in den abgedichteten Zustand,
wobei der Mutternumfangswandrand (44) ein beabstandetes Paar von nach innen gerichteten Drehanschlägen (96A, 96B; 97A, 97B) und ein inneres Sperrrad (84) enthält, und
wobei die Rohrmuffe eine nach außen gerichtete Zacke (83A, 83B) enthält, die anfänglich zwischen dem beabstandeten Paar von nach innen gerichteten Drehanschlägen in dem installationsfertigen Zustand eingebracht ist und danach mit dem inneren Sperrrad in Eingriff kommt, wenn die Rohrverbindung aus dem installationsfertigen Zustand in den abgedichteten Zustand angezogen wird.

4. Rohrverbindung nach einem der Ansprüche 1 bis 3, wobei die Rohrmuffe ein diametrales Paar von längsgerichteten Rohrmuffenmarkierungen (94A, 94B) enthält und die Mutter ein diametrales Paar von längsgerichteten Muttermarkierungen (98A, 98B) enthält, wobei sich das diametrale Paar von Muttermarkierungen in dem installationsfertigen Zustand in einer Drehposition relativ zu dem diametralen Paar von Rohrmuffenmarkierungen befindet und sich das diametrale Paar von Muttermarkierungen in einer anderen Drehposition relativ zu dem diametralen Paar von Rohrmuffenmarkierungen befindet, wenn die Mutter in den abgedichteten Zustand an der Rohrmuffe ausreichend angezogen wird, um die visuelle Angabe bereitzustellen, dass die Rohrverbindung anschließend aus dem installationsfertigen Zustand in den abgedichteten Zustand angezogen wurde.

5. Rohrverbindung nach einem der Ansprüche 1 bis 4, wobei die Mutter durch Zweistufen-Spritzgießen hergestellt ist und einen spritzgegossenen Mutternkörper und eine spritzgegossene integrale Dichtung, die auf den Mutternkörper umspritzt ist und die Dichtung bildet, enthält,
wobei der Mutternkörper die Mutternumfangswand (43) und einen ringförmigen Mutternkörperrand (52; 58; 66) quer zur Mutternlängsachse enthält,
wobei der ringförmige Mutternkörperrand eine innere ringförmige Mutternkörperrandumfangsoberfläche, die gleichgerichtet mit der Mutternlängsachse ist, eine äußere ringförmige Mutternkörperrandendfläche, die von dem Mutternumfangswandrand abgewandt ist, und eine innere ringförmige Mutternkörperrandendfläche, die zu dem Mutternumfangswandrand hin weist, aufweist und
wobei die umspritzte integrale Dichtung einen nach innen gerichteten verformbaren Kragen aufweist, der einen nicht verformten Innendurchmesser D2 aufweist, wobei D1>D2, sodass ein Einsetzen des Rohrendes durch die Mutter in die Rohrmuffe den nach innen gerichteten verformbaren Kragen radial nach außen weg von der Mutternlängsachse verformt und anschließendes Anziehen der Mutter an der Rohrmuffe in den Dichtungszustand den nach innen gerichteten verformbaren Kragen weiter verformt, um das Rohrende in der Rohrverbindung abzudichten.

6. Rohrverbindung nach Anspruch 5, wobei die umspritzte integrale Dichtung auf die innere ringförmige Mutternkörperrandendfläche spritzgegossen ist, sodass die äußere ringförmige Mutternkörperrandendfläche die äußere ringförmige Mutternrandendfläche bildet.

7. Rohrverbindung nach Anspruch 5, wobei die äußere ringförmige Mutternkörperrandendfläche einen Außenring und einen Innenring enthält, der in Bezug auf den Außenring zu dem Mutternumfangswandrand hin vertieft ist, und die umspritzte integrale Dichtung auf den ringförmigen Mutternkörperrand spritzgegossen ist, sodass die umspritzte integrale Dichtung die innere ringförmige Mutternkörperrandumfangsoberfläche und den Innenring der äußeren ringförmigen Mutternkörperrandendfläche auskleidet, sodass der Außenring der äußeren ringförmigen Mutternkörperrandendfläche und die umspritzte integrale Dichtung die äußere ringförmige Mutternrandendfläche bilden.

8. Rohrverbindung nach Anspruch 5, wobei der ringförmige Mutternkörperrand mehrere in Umlaufrichtung beabstandete durchgehende Öffnungen enthält, die sich zwischen der äußeren ringförmigen Mutternkörperrandendfläche und der inneren ringförmigen Mutternkörperrandendfläche erstrecken, und die umspritzte integrale Dichtung auf den ringförmigen Mutternkörperrand spritzgegossen ist, sodass die umspritzte integrale Dichtung den ringförmigen Mutternkörperrand darin einbettet, sodass die umspritzte integrale Dichtung die äußere ringförmige Mutternrandendfläche bildet.

## Revendications

1. Raccord de tuyau (10E ; 10F ; 10G) destiné à être utilisé avec un tuyau (13) ayant un diamètre de tuyau externe D1 et une extrémité de tuyau, le raccord de tuyau comprenant :
(a) une douille de tuyau (12) permettant l'insertion coulissante de l'extrémité de tuyau dans celle-ci, ladite douille de tuyau ayant un axe de douille de tuyau longitudinal (18) et une surface de douille de tuyau périphérique (19) co-directionnelle avec ledit axe de douille de tuyau longitudinal et une face d'extrémité de douille de tuyau annulaire (21) transversale audit axe de douille de tuyau longitudinal, ladite surface de douille de tuyau périphérique ayant un filetage externe (22) adjacent à la face d'extrémité de douille de tuyau annulaire ;
(b) un écrou (14 ; 40A ; 40B ; 40C) permettant le serrage sur ladite douille de tuyau pour sceller l'extrémité de tuyau (13) dans le raccord de tuyau, ledit écrou ayant un axe d'écrou longitudinal (41) co-axial avec ledit axe de douille de tuyau longitudinal lors du serrage dudit écrou sur ladite douille de tuyau, ledit écrou ayant une paroi d'écrou périphérique (43) co-directionnelle avec ledit axe d'écrou longitudinal et un rebord d'écrou annulaire (42) transversal à celui-ci, ladite paroi d'écrou périphérique ayant un rebord de paroi d'écrou périphérique (44) espacé dudit rebord d'écrou annulaire, ladite paroi d'écrou périphérique ayant un filetage interne (48) pour un engagement par filetage avec ledit filetage externe ;
(c) un joint (16 ; 51A ; 51B ; 51C) déployé entre ledit écrou et ladite douille de tuyau pour sceller le raccord de tuyau dans un état étanche lors du serrage dudit écrou sur ladite douille de tuyau ; et
(d) un agencement prêt à l'installation (92) pour permettre l'assemblage initial en usine du raccord de tuyau dans un état prêt à l'installation ;
ledit agencement prêt à l'installation comprenant une dent déployée entre une paire espacée de butées de rotation de sorte qu'il existe un jeu de rotation dudit écrou sur ladite douille de tuyau dans ledit état prêt à l'installation pour empêcher le desserrage du raccord de tuyau en l'absence d'un couple de desserrage suffisant pour surmonter la résistance fournie par la dent agissant contre l'une des butées de rotation lors d'une rotation de desserrage dudit écrou par rapport à ladite douille de tuyau, et empêcher l'application d'une force de scellement sur ledit joint en l'absence d'un couple de serrage suffisant pour surmonter la résistance fournie par la dent agissant contre l'autre butée de rotation lors d'une rotation de serrage opposée dudit écrou par rapport à ladite douille de tuyau, tout en permettant à l'extrémité de tuyau d'être facilement insérée à travers ledit écrou dans ladite douille de tuyau sans avoir à desserrer ledit écrou, et
ledit agencement prêt à l'installation configuré pour fournir une indication visuelle que le raccord de tuyau a ensuite été serré dudit état prêt à l'installation audit état étanche.

2. Raccord de tuyau selon la revendication 1, dans lequel ledit rebord de paroi d'écrou périphérique (44) comprend une paire espacée de butées de rotation dirigées vers l'intérieur (96A, 96B ; 97A, 97B) et ladite douille de tuyau comprend une dent dirigée vers l'extérieur (93A, 93B) déployée entre ladite paire espacée de butées de rotation dirigées vers l'intérieur dans ledit état prêt à l'installation.

3. Raccord de tuyau selon la revendication 1 et comprenant en outre au moins un agencement à cliquet ayant un couple de desserrage pour desserrer le raccord de tuyau dudit état étanche au-delà d'un couple de serrage pour serrer le raccord de tuyau dans ledit état étanche,
dans lequel ledit rebord de paroi d'écrou périphérique (44) comprend une paire espacée de butées de rotation dirigées vers l'intérieur (96A, 96B ; 97A, 97B) et une roue à cliquet interne (84), et
ladite douille de tuyau comprend une dent dirigée vers l'extérieur (83A, 83B) initialement déployée entre ladite paire espacée de butées de rotation dirigées vers l'intérieur dans ledit état prêt à l'installation et mettant ensuite en prise ladite roue à cliquet interne lors du serrage du raccord de tuyau dudit état prêt à l'installation audit état étanche.

4. Raccord de tuyau selon l'une quelconque des revendications 1 à 3, dans lequel ladite douille de tuyau comprend une paire diamétrale de marqueurs de douille de tuyau dirigés longitudinalement (94A, 94B) et ledit écrou comprend une paire diamétrale de marqueurs d'écrou dirigés longitudinalement (98A, 98B), dans lequel ladite paire diamétrale de marqueurs d'écrou sont dans une position de rotation par rapport à ladite paire diamétrale de marqueurs de douille de tuyau dans ledit état prêt à l'installation et ladite paire diamétrale de marqueurs d'écrou sont dans une autre position de rotation par rapport à ladite paire diamétrale de marqueurs de douille de tuyau lors du serrage suffisant dudit écrou vers ledit état étanche sur ladite douille de tuyau pour fournir ladite indication visuelle que le raccord de tuyau a ensuite été serré dudit état prêt à l'installation audit état étanche.

5. Raccord de tuyau selon l'une quelconque des revendications 1 à 4, dans lequel ledit écrou est fabriqué par moulage par double injection et comprend un corps d'écrou moulé par injection et un joint intégré moulé par injection surmoulé sur ledit corps d'écrou et constituant ledit joint,
ledit corps d'écrou comprenant ladite paroi d'écrou périphérique (43) et un rebord de corps d'écrou annulaire (52 ; 58 ; 66) transversal audit axe d'écrou longitudinal,
ledit rebord de corps d'écrou annulaire ayant une surface périphérique de rebord de corps d'écrou annulaire interne co-directionnelle avec ledit axe d'écrou longitudinal, une face d'extrémité de rebord de corps d'écrou annulaire externe tournée à l'opposé dudit rebord de paroi d'écrou périphérique et une face d'extrémité de rebord de corps d'écrou annulaire interne tournée vers ledit rebord de paroi d'écrou périphérique, et
ledit joint intégré surmoulé ayant un collier déformable dirigé radialement vers l'intérieur ayant un diamètre interne non déformé D2 où D1>D2 de sorte que l'insertion de l'extrémité de tuyau à travers ledit écrou dans ladite douille de tuyau radialement vers l'extérieur déforme ledit collier déformable dirigé radialement vers l'intérieur en éloignement dudit axe d'écrou longitudinal et le serrage ultérieur dudit écrou sur ladite douille de tuyau vers ledit état étanche, déforme davantage ledit collier déformable dirigé radialement vers l'intérieur pour sceller l'extrémité de tuyau dans le raccord de tuyau.

6. Raccord de tuyau selon la revendication 5, dans lequel ledit joint intégré surmoulé est moulé par injection sur ladite face d'extrémité de rebord de corps d'écrou annulaire interne de sorte que ladite face d'extrémité de rebord de corps d'écrou annulaire externe constitue ladite face d'extrémité de rebord d'écrou annulaire externe.

7. Raccord de tuyau selon la revendication 5, dans lequel ladite face d'extrémité de rebord de corps d'écrou annulaire externe comprend une bague externe et une bague interne en retrait par rapport à ladite bague externe vers ledit rebord de paroi d'écrou périphérique et ledit joint intégré surmoulé est moulé par injection sur ledit rebord de corps d'écrou annulaire de sorte que ledit joint intégré surmoulé tapisse ladite surface périphérique de rebord de corps d'écrou annulaire interne et ladite bague interne de la face d'extrémité de rebord de corps d'écrou annulaire externe de sorte que ladite bague externe de la face d'extrémité de rebord de corps d'écrou annulaire externe et ledit joint intégré surmoulé constituent ladite face d'extrémité de rebord d'écrou annulaire externe.

8. Raccord de tuyau selon la revendication 5, dans lequel ledit rebord de corps d'écrou annulaire comprend de multiples ouvertures traversantes espacées circonférentiellement s'étendant entre ladite face d'extrémité de rebord de corps d'écrou annulaire externe et ladite face d'extrémité de rebord de corps d'écrou annulaire interne, et ledit joint intégré surmoulé est moulé par injection sur ledit rebord de corps d'écrou annulaire de sorte que le joint intégré surmoulé encastre ledit rebord de corps d'écrou annulaire dans celui-ci de sorte que ledit joint intégré surmoulé constitue ladite face d'extrémité de rebord d'écrou annulaire externe.
